# EUROPEAN PATENT SPECIFICATION

(11) **EP 3 635 447 B1**
(45) Date of publication and mention of the grant of the patent: **05.02.2025**
(21) Application number: 18734639.0
(22) Date of filing: 08.06.2018
(51) Int. Cl.: G01V 3/10, G01V 3/08

(54) **SHOE SCANNING SYSTEM FOR FULL-BODY SCANNER**
SCHUHABTASTSYSTEM FÜR GANZKÖRPERSCANNER
SYSTÈME DE BALAYAGE DE CHAUSSURE POUR SCANNER CORPOREL

(30) Priority: 09.06.2017 CH 7482017
(43) Date of publication of application: 15.04.2020
(73) Proprietor: Sedect SA, 1196 Gland (CH)
(72) Inventor: MONNIER, Frédéric, 2016 Cortaillod (CH); LANY, Marc, 1180 Rolle (CH); SOLDADO GRANADEIRO ROSADO, Luis Filipe, 1049-001 Lisboa (PT); SANTI, Gilles, 1018 Lausanne (CH); REVAZ, Bernard, 1205 Genève (CH); BERTHOUD, Alain, 1219 Châtelaine (CH)
(74) Representative: P&TS SA (AG, Ltd.)
(86) International application number: PCT/IB2018/054157
(87) International publication number: WO 2018/225028

(56) References cited:
- WO-A1-2011/063059
- US-A1- 2004 222 790
- US-A1- 2009 153 346
- US-A1- 2011 163 876

## Description

### Field of the invention

The present invention concerns a shoe scanning system for scanning an individual before access to a restricted access area.

### Description of related art

The prevention of accidental and malicious harm and the repression of illegal and criminal acts often imply the creation of restricted access areas in sensitive facilities and buildings. Such restricted access areas are provided at their entry points with security scanning systems for detecting dangerous and illegal objects worn or carried by persons wanting to access the restricted area. Transportation hubs for example, airports are provided with security systems for protecting passengers, staff and vehicles from accidental and malicious harm (e.g. airport security).

The security scanning systems are, in general, in form of a full-body scanner, i.e. a device configured to scan the entire body of an individual by means of a screening technique harmless to human, such as millimetre-wave imaging, for detecting hidden objects without asking the individual to remove clothes and without physical contact. The screening process provided by today's body scanners is generally static, i.e. the individual must stand still during a scan.

In the domain of the security, it is known that shoes and footwear can provide hiding places for carrying dangerous and illegal objects. Therefore, airport security regulations commonly impose the control of shoes against the presence of metal. As shoes frequently incorporate metals parts, such as reinforcements, it creates a lot of false positive results. When metal is detected, the person is often required to remove his shoes, put them in a tray on a conveyor for them to go through a more invasive (and potentially harmful to human) screening technique, and go through the portal a second time without his shoes. This move back to the conveyor strongly disrupts the flow of persons in the queue and dramatically increases the waiting time for the next persons.

In order to avoid this need for double scanning of some passengers, some airports require all passengers to remove their shoes and put them in a tray in advance. However, the shoe removal process causes great inconvenience and further delays in the queue.

US2011/0129063 discloses an X-ray inspection system for shoes. This system eliminates the need for the persons to remove their shoes. However, this system requires an operator to analyse the images of the shoes. Moreover, X-Ray scanning all passengers exposes them to ionizing radiation which is undesirable for health reasons.

EP0978734 describes a metal detector for detecting metal objects in shoes. The detector is hidden in a carpet and not seen by the users. An acoustic or optical signal is emitted when a metallic object is detected.

As these detecting devices and methods are destined to be integrated within the structure of security portal or lodged in dedicated cavities of restricted access infrastructures, a novel installation as well a replacement of an obsolete detecting device would require a substitution of the entire security portal or modifications of infrastructures, creating additional costs.

Devices for scanning shoes separately are also known in the prior art. As an example, US7352180 discloses a device for detecting non-authorized material in shoes, the detection being based on Nuclear Magnetic Resonance.

US6970087 and EP1411373 disclose devices having recesses for receiving both feet of the user so as to simultaneously scan both his shoes for metal objects.

US2004/0222790 discloses a detector of threat material in shoes. A screening process is activated manually or automatically when the device senses the presence of a measurable object. In one embodiment, the device comprises an antenna coil under or in the top of the detection device onto which the person has to step for accessing the restricted area. The device performs its measurements and provides one or more indications on an output device. For example, such an indication may be visual in the form of a light: green for no threat, red upon threat detection and yellow when results are inconclusive and the measurement must be repeated.

Those prior art devices requires an accurate positioning of the shoe of the individual relative to the detector. Requesting all persons to precisely position one or both shoes onto a detector is not user-friendly and creates an additional delay in the queue. Moreover, those devices further require an intervention of an operator of the security portal for instructing the users.

It would also be desirable, before the security portal at the entrance to a restricted area, to detect those persons who have metal parts in their shoes and those who need to remove their shoes. This would avoid the need for other persons to remove their shoes, and reduce the delays created by a person who needs to go back, remove the shoes, and pass through the security portal a second time after a metal detection.

In order to address the problem, US7053785 discloses a pre-screening device which may alert persons subjected to a screening process that their shoes may contain enough material to set off the alarm of a metal detector. In this way, the individual may take the proper steps to avoid an alarm caused by their shoes. Similarly, individuals without sufficient material present in their shoes to set off an alarm may proceed through the screening process without delay. However, this device requires the user to place systematically his shoe in a compartment of the metal detector, leading to a creation of an additional delay for all persons in the queue.

### Brief summary of the invention

The aim of the invention is to provide a shoe scanning system for scanning shoes of individuals for detecting metal and/or non-authorized object that is devoid of, or at least mitigates, the drawbacks of the shoes scanning devices of the prior art.

According to the invention, these aims are achieved by means of the shoe scanning system of claim 1.

The proposed shoe scanning system increases the security of body portal as it provides a detection of metal and/or unauthorized (i.e. non-authorized) object within the blind and/or the oriented-blind detection space (or volume) of the full-body scanner. In fact, full-body scanners typically exhibit a blind and/or an oriented-blind detection volume wherein the full-body scanner is unable to sense dangerous and illegal objects, either intrinsically (blind detection space) or because of a lack of sensitivity to certain orientations (in general horizontal) of potentially dangerous metallic components (oriented-blind detection space).

Moreover, the proposed shoe scanning system increases the security of body portal providing a detection of metal and/or unauthorized object within the indiscriminating space (or volume) of the full-body scanner. In fact, full-body scanners typically exhibit a volume wherein the full-body scanner is unable to discriminate unharmed material from metallic ones leading to consider all shoes within this space as potentially dangerous.

Another benefit is that the shoe scanning system can accurately detect objects that are very difficult to view or identify in the body scan image, e.g. due to their orientation.

Another benefit is that the vertical encumbrance of the detector can be limited to few centimetres, rendering this solution compatible with existing access paths and security portals of facilities and buildings, without requiring complex and bulky installations.

The solution further provides a reliable security scan of persons while not being subject to technical obsolescence. In fact, the solution provides the suspicion of the problematic presence of a metal object and/or unauthorized object. In case of a suspicion, the detection of dangerous and illegal objects worn or carried by the user relies on other detectors equipping the security portal scanning. Advantageously, the scan of unworn shoes can thus relay on dedicated, invasive and/or potentially harmful detection systems that could provide more accurate detection of illegal and dangerous objects and substances (e.g. X-ray based systems).

The scanning of the shoes worn by the person walking or standing on a walking surface of a full-body scanner or on a path toward or backward the full-body scanner contributes to a rapid and comfortable passage of the flow of persons through the security portal. In fact, persons are not prompted to systematically remove shoes before/after the full-body scanner. Moreover persons are not prompted to systematically position themselves at a predefined position so as to scan theirs shoes.

According to the invention, the processing unit and/or the detector are configured to discriminate a metal and/or unauthorized object above the walking surface up to a detection threshold distance, the detection threshold distance being selectable in a range from a predetermined minimal detection distance (e.g. 1 cm) to a predetermined maximal detection distance (e.g. 20 cm). This solution permits to adjust the scanning space provided by the shoe scanning system.

An adjusting of the scanning space provided by the shoe scanning system can be desirable, for example, for reducing the overlap with the detecting space of the full-body scanner. A reduced overlap permits so to reduce the number of false alarm generated by the shoe scanning system when detecting unharmed objects located in the common, overlapping space.

In an embodiment, the sensing elements comprise one or more short-range inductive sensing elements arranged to detect a metal object up to a maximal distance. The sensing elements further comprises one or more long-range inductive sensing elements arranged to detect a metal object up to a maximal distance that is bigger than those of the short-range one. Alternatively or complementarily, the short and long-range inductive sensing elements are arranged to detect a unauthorized object, notably a given unauthorized object or an object within a list of unauthorized objects.

Alternatively or complementarily, the sensing elements comprise one or more short-range capacitive sensing elements arranged to detect a metal and/or unauthorized object up to a maximal distance. The sensing elements further comprises one or more long-range capacitive sensing elements arranged to detect a metal and/or unauthorized object up to a maximal distance that is bigger than those of the short-range one.

These solutions permit to select or adjust the detection threshold distance by combining results provided by the short-range and long-range inductive and/or capacitive sensing elements.

These solutions also permit to provide a more accurate detection of a metal and/or unauthorized object up to the first maximal distance with respect to the detection provided between the first and the second maximal distance, by combining results provided by the short-range and long-range sensing elements. In particular, the first maximal distance can be set so as to coincide with the (typically or standardized) thickness of a sole (i.e. lower part) of a shoe so as to provide a more accurate detection of objects within the sole with respect to other (i.e. upper) parts of the shoe.

Preferably, distinct maximal distances are provided by distinct printed surfaces of the sensing elements and/or by distinct detection sensibilities thereof. In one embodiment, the long-range inductive sensing element has a printed surface that is at least the double with respect of the printed surface of the short-range inductive sensing element. Alternatively or complementarily, the processing unit and/or the main detector are arranged to modify a detection sensibility of the short-range sensing element(s) and/or of the long-range sensing element(s) so as to adjust and/or setup the maximal distance thereof.

In an embodiment, the detecting unit is provided with a protective casing providing a walking surface. Advantageously, the sensing elements of the main detector are located in one or more recesses of the protective casing, in particular in one or more recesses of a cover of the protective casing. This solution permits to protect the sensing elements from forces acting on the walking surface (notably the weight of the individual walking or standing on the protective casing), in particular during the scanning of metal and/or unauthorized objects so as to guarantee a reliable scanning of metal objects.

In an embodiment, the processing unit is configured to control the communication unit for prompting the individual to place his shoe at a specific position if the proximity detector indicates that the shoe is positioned outside said specific position. This solution permits to provide a reliable (second or re-) scan of the shoe, in particular for validating a probability of a presence of a metal and/or unauthorized objet that is lower than the predefined detecting threshold provided by a first scan of the shoe located outside the predefined position.

Alternatively or complementarily, the processing unit is configured to control the communication unit for sending a stop signal in order to prompt the individual to stop walking towards restricted access area and to remove his shoe if the main detector indicates a probability of a presence of a metal and/or unauthorized objet that is higher than said predefined detecting threshold. The stop signal may be optical, acoustic or physical (barrier staying closed).

Alternatively or complementarily, the processing unit is configured to control the communication unit for sending a go signal in order to prompt the individual to go to the full-body scanner or move on if the correct position of the shoes has been ascertained by the proximity detector and no metal and/or unauthorized object has been detected. The go signal may be optical, acoustic or physical (barrier opening access to body scan or restricted area).

The invention further concerns a method for retrofitting a full-body scanner for scanning an individual before access to a restricted access area, in particular of a full-body scanner in form of (or integrated within) a security portal, by means of the shoe scanning systems of the invention.

In a particular embodiment, the method further comprises a step of selecting the detection threshold distance so as to provide a detection of a metal and/or unauthorized object within a blind, an oriented-blind and/or indiscriminating detection volume of the full-body scanner. This permit to adjust the scanning space to those provided by the already installed or predefined full-body scanner.

In another embodiment, the method further comprises a step of selecting a detection threshold for objects that are difficult to pick up in a body scan image due to their small cross-section or surface in said image.

In a particular embodiment, the method further comprises a step of modifying a detection sensibility of the short-range inductive/capacitive sensing element(s) and/or a detection sensibility of the long-range inductive/capacitive sensing element(s). This solution permits to select or adjust the detection threshold distance by combining results provided by the short-range and long-range sensing elements.

### Brief Description of the Drawings

The invention will be better understood with the aid of the description of an embodiment given by way of example and illustrated by the figures, in which:
Fig. 1 shows a view of a shoe scanning system for a full-body scanner, according to the invention;
Figs.2 and 3 shows others spatial arrangements between the shoe scanning system and the full-body scanner of Fig.1;
Figs. 4a-c show exemplary messages providing instructions to an individual under scanning and/or to an assistant of the full-body scanner;
Figs. 5 and 6 are sectional views illustrating technical features of the metal/unauthorized object detector and the proximity detector of the shoe scanning system of Fig. 1;
Figs. 7 and 8 show sectional views of others embodiments of the shoe scanning system, according to the invention;
Fig. 9 shows a view of a PCB with the sensing circuits of the metal/unauthorized object detector and the proximity detector;
Fig.10 shows a diagram flow describing the method for retrofitting a body scanning with one of the shoe scanning systems, according to an example not forming part of the invention.

### Detailed Description of possible embodiments of the Invention

The restricted access area is a predefined zone whose access is limited to a group of persons, e.g. passengers of the facility of transportation, who are subjected to a security check for detecting problematic objects. The restricted access areas are thus provided with one or more access points, each accessing point being equipped with one or more security portals for detecting dangerous and illegal objects and substances worn or carried on the body of persons wanting to access the restricted area. The path to the restricted area can be physically delimited by barriers and obstacles so as to manage the flow of persons through the security portal.

The security portal comprises machines for detecting metal and dangerous substances worn by an individual as well in his carried object, such as baggage, suitcase, handbags, and laptops.

The security portal comprises a body scanning system destined to scan the entire body of a person by means of harmless technologies. The security portal is also generally equipped by object scanning systems destined to scan such carried object as bags, jackets, electronic equipment, etc. These object scanning systems are generally based on harmful technologies providing a more efficient detection than harmless technologies.

Persons wanting to access the restricted access area are thus prompted to put their belongings, such as baggage, suitcase, handbag, and laptops, on the conveyor belt of the object scanning device for security scan. Persons are also prompted to remove such clothes components and garnishes that are known to be made of, or to comprise, inert metallic parts for carrying on a shape and/or substance-based security scanning, notably via object scanning devices. Other clothes components and garnishes, such as belts and jackets, that the person can easily and comfortably take off, are to be removed and placed on the conveyor belt for security scanning.

Shoes are processed in a different way, as shoes and footwear do not necessarily comprise metallic parts and most of the full-body scanners are incapable of detecting threats in the whole volume of the shoe in the typical inspection position (person standing in the body scan). Full-body scanners typically exhibit a detection volume wherein the full-body scanner is unable to sense dangerous and illegal objects, as unable to sense a metallic object (blind detection space), because of a lack of sensitivity to certain orientations of potentially dangerous metallic components and/or as unable to discriminate unharmed material from metallic ones (indiscriminating detection space). Full-body scanners typically lacks of sensitivity of horizontal-oriented (potentially dangerous) metallic objects.

The systematic obligation either to place the shoes on predefined shoes scanner or to remove shoes and footwear before going through the security portal generates a systematic delay for passing the security check that leads to bottlenecks and blockages when a crowd or flux of persons simultaneously goes through the security portal, as in most airports.

Moreover, a systematic obligation to remove shoes or to place them within walled shoes detectors is uncomfortable for many persons, notably for persons having physical handicaps or limited movement due to aging.

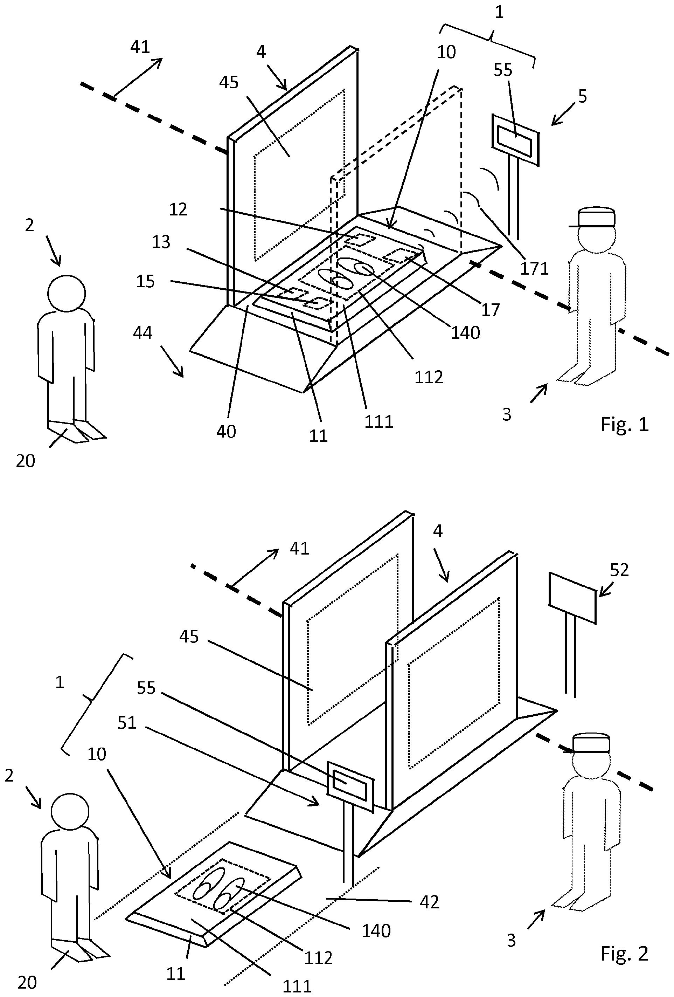

In order to limit such inconvenience, without reducing the security levels, the proposed method and system rely, as illustrated in Figs 1-3, on a shoe scanning system 1 comprising a detection unit 10 arranged to operate a scan of shoes worn by an individual 2 accessing a restricted access area 41 protected by a security portal 4 equipped with a full-body scanner 45.

The security portal 4 is an entrance to a security access area configured with lateral walls or obstacles for allowing a transit of one person at a time. The portal can be equipped with a single or a pair of doors for physically controlling the transit of the person through the portal. The illustrated security portal 4 comprises a base 40 (e.g. in form of flooring) on which the person walks for transiting throughput. The portal can be completed by an upper wall for further restricting the access by means of a covered passageway.

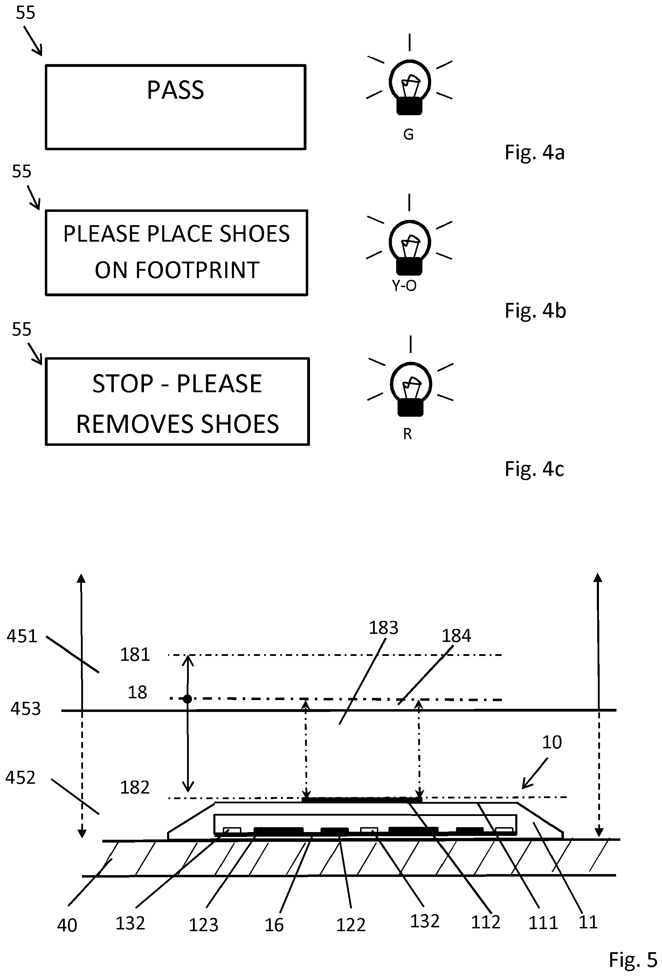

The full-body scanner 45 is a scanning device system configured to detecting dangerous and illegal objects worn, carried within clothing or hidden in cavities of the body by persons wanting to access the restricted area. As illustrated in Figure 5, the full-body scanner is able to sense dangerous and illegal objects that are located above (or at least at) the minimal detection height 453 with respect to the walking base 40 of the security portal 4. The full-body scanner is thus incapable of reliably detecting dangerous and illegal objects when those objects stay below this minimal height 453 throughout the security portal, i.e. when dangerous and illegal objects remain in his dead zone 452 during the full-body scanner.

The full-body scanner can sense objects if they present a certain cross section in their image. Thin objects on an unfavourable orientation, e.g. presenting a small cross-section or total surface in the body scan image - especially if they are in a zone with reduced sensitivity - may escape detection. The full-body scanner therefore also possesses a dead orientation for thin objects.

The detection unit 10 of the illustrated embodiment comprises:
a metal detector 12 for sensing a metal object located above a surface onto which the individual 2 can walk, the metal detector comprising at least one sensing elements (e.g. electromagnetic, inductive and/or capacitive sensing element) for sensing a metal object, this element being advantageously printed on a support (e.g. on a printed circuit board);
a communication unit 17 for transmitting a message to an indication unit 5, 51, 52 for providing instructions to the individual 2 and/or to an assistant 3 of the security portal; and
a processing unit 15 connected to the metal detector 12 by a data link for receiving data and controlling the communication unit 17 for sending a (metal) detection signal when the metal detector indicates a presence of a metal objet.

The data link can be an electrical, optical or electromagnetical connection providing data in a digital or analog form.

The sensing element can be printed on the support (e.g. printed circuit board), notably by serigraphy, by semiconductor lithography, by electrical conductive-inkjet printing, by 3D printing of electrical conductive material, or by a combination thereof.

The term "below" indicates a relative position along a direction having the same way as those of the terrestrial gravity. The term "above" indicates a relative positioning along a direction having a way opposed to those indicated by the term "below", i.e. opposed to those of the terrestrial gravity.

The sensing element can consist in, or comprises, an inductive sensing element comprising a coil. Alternatively or complementarily, it can consist in, or comprises, radio frequency (RF) antennas operating in the 100 kHz - 6 GHz range.

The detection unit 10 increases the security of body portal as it can be located below a surface on which an individual has to walk for accessing a restricted access area, without requiring complex and bulky installations, so as to provide a detection of metal objects within the blind and/or oriented blind detection space (or volume) of the full-body scanner. The detection unit 10 is compatible with existing access paths and security portals of facilities and buildings.

The solution further provides a reliable security scan of persons while not being subject to technical obsolescence. In fact, the solution provides the suspicion of the problematic presence of a metal object within the blind detection space of the full-body scanner.

Moreover, the scanning of the shoes worn by the person walking or standing on a walking surface of a full-body scanner or on a path toward or backward the full-body scanner contributes to a rapid and comfortable passage of the flow of persons through the security portal.

Alternatively, the detection unit 10 can be configured to be place on a walking surface.

The detection unit 10, notably the protecting casing of the detection unit, can be u-shaped or comprise a hole or a pair of holes at the position the feet of the passenger have to be (or should be) located during the scanning process executed by the full-body scan. The indentation of the U-shaped detection unit or the hole(s) thereof allows the passenger to stand in the exact same position and on the same surface as before the retrofit of the full-body scanner by means of the shoe scanning system1.

The protective casing can thus be configured to be placed on a detecting surface of the full-body scanner 45 so as to cover a limited portion thereof, while the sensing elements of the detection unit are configured, when the protective casing is placed on this detecting surface of the full-body scanner, to detect a metal objet within a shoe worn by an individual standing on an uncovered portion of this detecting surface, i.e. a portion of the detecting surface of the full-body scanner not covered by the protective casing of the detection unit.

The uncovered portion is at least partially delimited by a portion of the protective casing; said portion notably comprising a O-shaped, E-shaped, T-shaped, U-shaped, V-shaped, H-shaped, 8-shaped, Z-shaped, a S-shaped part or a combination thereof.

The protective casing can further encloses a proximity detector for detecting a positioning of a shoe of the individual on said uncovered portion so as the communication unit of the system can transmit a pass signal when:
the proximity detector indicates that the shoe lays on said uncovered portion, and
the metal detector indicates a probability of a presence of a metal object lower than the predefined detecting threshold.

However the passenger does not stand on (a surface of) the detection unit 10 during the scan process, the detection unit must be sufficiently robust to be walked on when the passenger enters and exits the full-body scanner. The detection unit is constructed such as not to constitute a tripping hazard (ramp angles below 20% and no step bigger than 5mm).

As illustrated in the exemplary embodiments of the Figs. 1-3, the detection unit 10 can comprise a protective casing 11 providing a protection of the sensing elements of the metal detector and the walking surface 111 above which the metal detector 12 senses a metal object worn by a walking individual. This permit to install the metal detector not only below a surface on which a person can walk, but also above this surface. The protective casing is also constructed such as not to constitute a tripping hazard (ramp angles below 20% and no step bigger than 5mm).

The protective casing 11 is configured to be placed on the surface 40, 42-44 onto which an individual 2 is supposed to walk and/or stand for accessing the restricted access area 41. The walking surface 111 of the protective casing overlaps thus this surface 40, 44.

The surface 40, 42-44 can be, notably, a surface of: the full-body scanner, the security portal, a path toward or behind the full-body scanner and/or the security portal. The protective casing can be configured to rest or to be fixed or stuck by means of fixing means, such as glue and screws, on the surface 40, 42-44.

The walking surface 111 of the protective casing 11 can be made of, or being covered by a layer of, no-slipping material, such as rubber.

The protective casing 11 encloses the metal detector 12 for detecting a metal object above the walking surface thereof. The sensing elements of the metal detector are preferably inductive sensing elements 122, 123, each of these elements being advantageously printed on either a same or a distinct support, e.g. printed circuit board (PCB).The inductive sensing elements are located below the walking surface 111 for sensing a metal object above the walking surface of the protective casing 11 (cf. Figs. 5-6).

The printed circuit board(s) 16 is (are) located substantially in parallel with respect to the walking surface 111 at said specific position 112, i.e. within an angle of +/- 10°.

The detection unit 10 advantageously provides a protection of the metal detector, notably of the sensing elements thereof. The protective casing can be thus a hermetic casing providing protection against dusts and/or liquids, in particular a watertight and/or airtight casing.

The detection unit 10 can advantageously provide a protection of the sensing elements against force acting on the walking surface 111, so as to permit the sensing elements to provide reliable measurements. The protective casing can be provided with recesses 113 in spatial correspondence with the location of the inductive sensing elements on the PCB, providing a physical separation between the sensing elements and the walking surface 111 along the gravity direction.

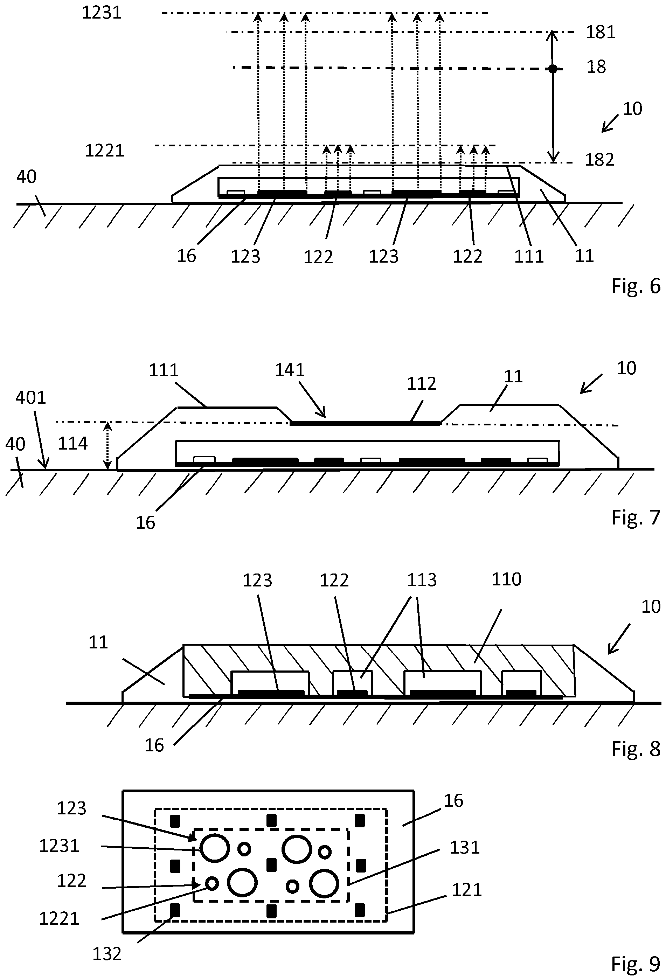

As notably illustrated in Fig. 8, the protective casing can comprise a cover 110 providing the walking surface and the recess 113 for protecting the inductive sensing elements.

The detection unit 10 further comprises a proximity detector 13 for detecting a positioning of a shoe 20 of the individual 2 on the surface. The proximity detector 13 comprises at least a proximity sensor for sensing the shoes and/or the individual wearing the shoes.

The proximity sensor can be a capacitive sensor 132, advantageously enclosed in the protective casing 11 for detecting a positioning of a shoe 20 of the individual 2 on the walking surface of the protective casing 11.

Alternatively or complementarily, the proximity sensor is an image sensor configured to provide an image of the individual on the walking surface. In fact, the function of the proximity detector can be achieved by optical means, such as filming the feet of the passengers with one or more cameras and subjecting the video to suitable image processing to generate estimates of the position of the feet of the passengers on the detection unit. In such an implementation, the camera(s) can be either part of the detection unit 10 or located elsewhere with the feet of the passenger in their field of view.

In particular, the proximity detector 13 is arranged to a detect positioning of a shoe 20 on a specific position 112 either on the surface or on the walking surface of the protective casing 11, where the metal detector 12 provides a (more or most) reliable scan of metal objects. The proximity sensor(s) is(are) located below the surface or walking surface of the of the protective casing 11 (cf. Figs. 5-6).

Advantageously, the proximity detector 13 and/or the processing unit is configured to discriminate a position of the shoe between at least two classes of positions: within the specific position 112 and outside the specific position.

The detection unit 10 further comprises a communication unit 17 for transmitting a message to an indication unit, preferably in form of a display unit 5, 51, 52, for providing instructions 55 and/or outcomes of the detection to the individual 2 and/or to an assistant 3 of the security portal 4.

The detection unit 10 further comprises a processing unit 15 connected to the metal detector 12 and to proximity detector 13 by a data link (not illustrated) for receiving data. The data link can be an electrical, optical or electromagnetical connection providing data in a digital or analog form. The processing unit is arranged for controlling the communication unit 17 for sending a metal detection signal when the metal detector indicates a presence of a metal object.

The processing unit can be a processing circuit configured to execute a series of operations involving collecting data and providing outcomes. The processing unit can be or comprise: a microcomputer, a microcontroller, an integrated processing circuit, a DSP, a FPGA. The processing unit can comprise a data and/or instructions storage memory. The operations that the processing unit has to execute can be physically pre-defined and/or defined by a series of instructions stored in the memory of the processing unit or in an accessible memory of the detection unit.

In particular, the processing unit is arranged for controlling the communication unit 17 for:
sending a pass signal in order to let the individual pass to the restricted access area when the proximity detector indicates that the shoe 20 lays at the specific position 112 on the surface /walking surface 111 and the metal detector indicates a probability of a presence of a metal and/or objet that is lower than a predefined threshold; and
sending a prompt message in order to prompt the individual to place his shoe 20 at said specific position if the proximity detector indicates that the shoe is positioned outside said specific position 112; and
sending a stop signal in order to prompt the individual to stop walking towards restricted access area 41 and to remove his shoe when the proximity detector indicates that the shoe 20 lays at the specific position 112 on the surface/walking surface 111 and the metal detector indicates a probability of a presence of a metal objet that is equal or higher than said predefined threshold.

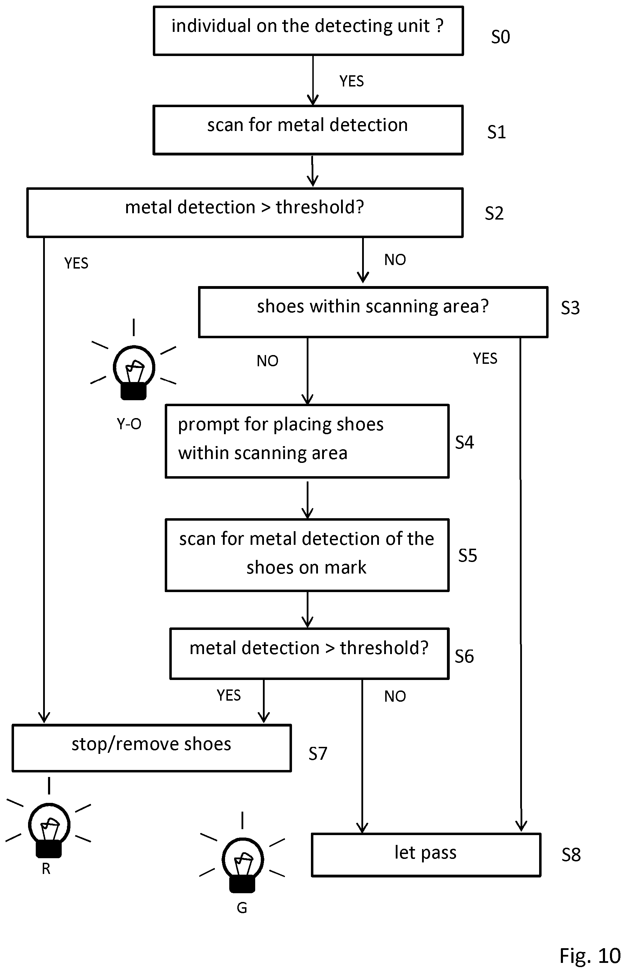

The flowchart of Fig. 10 illustrated a detecting method executable by means of the shoe scanning system, notably via the processing unit thereof.

A scan for metal object is started (S1) upon the proximity detector indicates that a shoe of an individual is placed on the walking surface (S0).

Alternatively, the scan for a metal object is continuously.

If the metal detector indicates a probability of a presence of a metal objet that is higher than a predefined threshold, the stop signal in sent for prompting the individual to stop walking towards restricted access area 41 and to remove his shoe (S7).

Otherwise, the position of the shoe on the surface/walking surface is checked (S3)

In case the proximity detector indicates that the shoe 20 is positioned at the specific position 112 on the surface/walking surface 111, a pass signal is sent in order to let the individual pass to the restricted access area (S8).

When the proximity detector indicates that both shoes are positioned at the specific position 112 on the surface/walking surface 111, a signal may be sent to the full-body scanner to initiate the scan. If only one shoe is detected, a specific instruction may be relayed either to the passenger or the security personnel in order to correct the position of the feet.

Otherwise, a prompt message is sent (S4) in order to rescan the shoe of the individual at said specific position (S5). If the metal detector indicates a probability of a presence of a metal objet that is higher than (the same or another) predefined detecting threshold, the stop signal in sent (S7). Otherwise, the pass signal is sent (S8).

In case the shoe scanning system is located above or below a scanning surface of a full-body scanner, the method can be alternatively started from step S3, as the passenger has anyhow to position himself on the foot prints of the full-body scanner for the screening process.

The indication unit 5, 51, 52 can be advantageously configured as follows:
in response of a reception of a pass signal, display a pass message for allowing the individual to walk towards or further in the restricted access area 41; the display of the pass message can be associated with a luminous signal, e.g. a green light (cf. step S8); an exemplary message with a luminous signal is illustrated in Fig. 4a;
in response of a reception of a prompt signal, display a prompt message for prompt the individual to place his shoe at the specific position; the display of the prompt message can be associated with a luminous signal, e.g. a yellow/orange light(cf. step S4); an exemplary message with a luminous signal is illustrated in Fig. 4b;
in response of a reception of a stop signal, display a prompt message for stopping the individual from walking towards restricted access area 41 and/or for removing his shoe; the display of the stop message can be associated with a luminous signal, e.g. a red light (cf. step S7); an exemplary message with a luminous signal is illustrated in Fig. 4c.

Advantageously, the proximity detector is also configured to provide an indication of a presence of a dangerous and illegal (non-metallic) object worn or carried by the individual. One or more proximity sensors of the proximity detector can be a capacitive sensor configured to measure the complex permittivity in the range of 100 kHz - 6 GHz typically, at one or several frequencies on one or both feet. The shoe scanning system, notably the detection unit or the auxiliary detector, can thus be configured to compare the measured complex permittivity with data stored, e.g. in a whitelist database, and to perform a statistical analysis to identify suspicious data and outliers.

Identified suspicious data and outliers may be used to generate an alarm. Identified suspicious data and outliers may be used for selecting certain passengers for additional checks (for instance theirs shoes may be scanned by XRays). The criteria defining the outliers can be tuned so as to lead to a defined number of passengers being more thoroughly searched per defined period of time.

The specific position 112 on the surface/walking surface 111 can be indicated by a position identifying mark 140, 141. The position identifying mark can take form of a printed, luminous and/or displayed mark located on the surface/walking surface, e.g. a footprint 140. The processing unit can be configured to activate the luminous and/or displayed mark (uniquely) when the individual has to be prompted to place his shoe 20 at said specific position.

Alternatively or complementarily, the position identifying mark can take form of a recess 141 of a portion of the walking surface (cf. Figure 7).

The scanning of the shoes worn by the person walking or standing on a surface of a full-body scanner or on a path toward or backward the full-body scanner contributes to a rapid and comfortable passage of the flow of persons through the security portal. In fact, persons are not prompted to systematically remove shoes before/after the full-body scanner. Moreover persons are not prompted to systematically position themselves at a predefined position so as to scan theirs shoes

Advantageously, the processing unit 15 is configured to control the communication unit 17 for sending the stop signal when the proximity detector indicates that the shoe 20 lays on the surface/walking surface 111 and the metal detector indicates a probability of a presence of a metal objet that is higher than said predefined detecting threshold or another predefined detecting threshold, i.e. independently of the position of the shoes with respect to the specific position 112 on the walking surface 111 (cf. step S7, Fig. 10).

This permit to immediately stop and/or prompt the individual independently if his shoes are located within or outside the specific position. This solution permits to spare time as the individual is not prompted to place his shoe at the specific position for a second, reliable scan of metal objects.

The protective casing 11 is advantageously a hermetic casing providing protection against dusts and/or liquids, in particular a watertight and/or airtight casing.

The protective casing of Figs.1-3 further encloses the processing unit 15 and the communication unit 17 of the detection unit so as the casing encloses the components of the detection unit providing a total protection against dust and/or liquid while facilitating an installation thereof.

The detecting unit 10 is powered by a power supply electrically connectable to a power-line network or to an Ethernet connexion (PoE). The detecting unit 10 can comprises an additional power source, e.g. in form of electrical accumulators or batteries, for powering the detecting unit 10 in case of an electrical dysfunction of the power-line network. Advantageously, the additional power source is electrically chargeable via the power-line network.

The detecting unit 10 is thus compatible with existing access paths and security portals of facilities and buildings, without requiring complex and bulky installations.

In an embodiment, the distance 114 between the walking surface 111, preferably at the predefined position 112, and the walking surface on which the detection unit is placed is less than 50 mm. This solution permits to efficiently place the detection unit on large typologies of surfaces on which the individual is supposed to walk and/or stand, in particular on surfaces of covered passageway and on surfaces located below arched entrances and portal.

In a preferred embodiment, the distance 114 is less than 20 mm, more preferably less than 10 mm. The protective casing 11 can thus take a form of a carpet, in particular of a semi-rigid carpet. Moreover, such as small distance permits to reduce the gap between the walking surface and the surface on which the protective casing is placed, reducing the inconveniences for a individual that has to walk on.

In the exemplary embodiment of the Figure 1, the protective casing 11 is located on a surface being an above-ground base 40 of the security portal 4 including the full-body scanner 45. The above-ground base 40 is located between the lateral walls of the security portal and it is accessible to the individual through a pair of ramps located at the pass-through extremities of the base.

In the exemplary embodiment, the communication unit 17 is configured to transmit messages to a display unit 5 which equips the security portal 4 and is visible by individual 2 when walking through the security portal.

Alternatively or complementarily, a display unit (not illustrated) can be integrated in an external surface of the protective casing and configured to operate with the communication unit 17 for providing instructions to the individual within the security portal.

As the body scanning executed by the full-body scanner lasts typically longer than those required by the shoe scanning system, a scanning of the shoes worn by the individual can be advantageously executed within the scanning executed by the full-body scanner. A scanning executed in a dead time contributes to a rapid and comfortable passage of the flow of persons through the security portal.

In the exemplary embodiment of the Figure 2, the protective casing 11 enclosing the metal detector 12 is located on a path 42 towards the security portal 5. The path 42 to the restricted access area 41 can be physically delimited by barriers and obstacles (not illustrated) so as to manage the flow of persons through the security portal 4.

Alternatively, the protective casing 11 can be located on a surface of the ramp located at the entry of the above-ground base. Alternatively, the printed circuit board(s) with the printed inductive sensing elements 122, 123 can be even located below a surface of the ramp located at the entry of the above-ground base, with or without the protective casing.

In the embodiment of the Figure 2, the shoe scanning system further comprises a display unit 52 for providing instructions to the individual within the security portal.

This indication unit 52 can be further configured to:
in response of a reception of the pass signal, display a directional array for indicating a relative position of the full-body scanner; and/or
in response of a reception of the stop signal, display a directional array for indicating a relative position of a seating place for removing the shoes.

As the scanning executed while the individual is waiting for accessing the full-body scanner, the passage of the flow of persons through the security portal is not affected by this scanning, contributing to a rapid and comfortable passage of the flow of persons through the security portal.

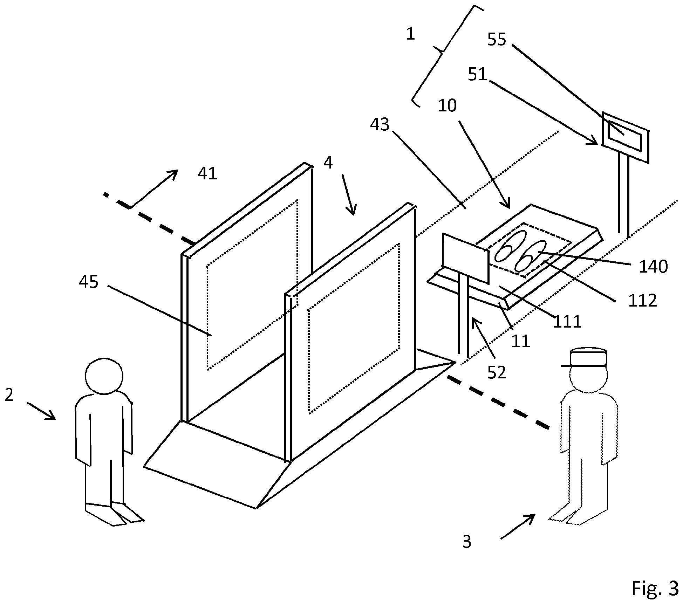

In the exemplary embodiment of the Figure 3, the protective casing 11 enclosing the metal detector 12 is located on a path 43 behind the security portal 5, i.e. in a first or entry portion of the restricted access area 41. The path 43 can be physically delimited by barriers and obstacles (not illustrated) so as to manage the flow of persons accessing this portion of the restricted access area 41 that is still under control of one or more assistants 3 assigned to the security portal.

Alternatively, the protective casing 11 can be located on a surface of the ramp located at the exit of the above-ground base. Alternatively, the printed circuit board(s) with the printed inductive sensing elements 122, 123 can be even located below a surface of this ramp, with or without the protective casing.

In the embodiment of Figure 3, the shoe scanning system further comprises a display unit 53 for providing instructions to the individual within the security portal.

This indication unit 53 can be further configured to display a directional array for indicating a relative position of a seating place for removing the shoes in response of a reception of the stop signal.

As the outcome of the scanning executed by the full-body scanner requires more than 10 seconds, a scanning of the shoes worn by the individual can be advantageously executed within this dead time.

The processing unit 12 and/or the metal detector 12 are advantageously configured to discriminate a metal object above the walking surface up to a selectable detection threshold distance 18 (Fig. 5). This permits to adjust the detection space (volume) 183 with respect to the detecting volume 451 of the full-body scanner, i.e. so as to detect a metal object within the blind detection space 452 of the full-body scanner.

Advantageously, the selectable detection threshold distance 18 permit to reduce the vertical overlap between the detecting space 451 of the metal detector and the detecting space of the full-body scanner to a small amount, the height of this overlapping volume 184 being less than 10 cm, advantageously less than 5 cm. A reduced vertical overlap permits to reduce false alarm generated by the shoe scanning system when detecting unharmed objects located in the overlapping space, while guarantee the coverture of the blind space.

The detection threshold distance 18 is thus selectable in a range from a predetermined minimal detection distance 182 to a predetermined maximal detection distance 183. Preferably, the predefined minimal detection distance is 1 cm and the predefined maximal detection distance is 20 cm. These solutions permit to adjust the scanning space to those provided by already existing full-body scanner.

A selectable detection threshold distance 18 is advantageously provided by combining results provided by inductive sensing elements arranged to sense metallic object to distinct maximal distances.

In the embodiment of Fig. 6, the sensing elements of the metal detector comprises comprise:
- a series of short-range inductive sensing elements 122, each arranged to detect a metal object up to a maximal distance 1221; and
- a series of long-range inductive sensing elements 123, each arranged to detect a metal object up to a maximal distance 1231 higher than those of the short-range inductive sensing elements 122.

A combination between the results provided by the short-range inductive sensing elements 122 and the results provided by the long-range inductive sensing elements 123 permits to adapt the selectable detection threshold distance 18 up to the maximal distance 1231 of the long-range inductive sensing elements 123.

The maximal distance 1221 of the short-range inductive sensing elements 122 is thus lower than the predetermined maximal detection distance 181, while the maximal distance 1231 of the long-range inductive sensing elements 123 is either equal or higher than the predetermined maximal detection distance 181.

The maximal distance of the inductive sensing elements depends, notably, on the responsivity of the inductive sensing element, i.e. the input/output gain provided by the inductive sensing element. A given responsivity of an inductive sensing elements can be obtained by a dimensioning the inductive sensing element (e.g. inductive coil) and by varying the detection sensitivity thereof, i.e. amplifying/decreasing the sensed value.

Preferably, distinct maximal distances are provided by distinct (advantageously printed) surfaces of the sensing elements, as illustrated in the exemplary embodiment of Fig. 9. For example, the surface 1231 of a long-range inductive sensing element 123 is bigger than the surfaces 1221 of a short-range inductive sensing element 122, so as to provide a better responsivity.

The applicant observed that a long-range inductive sensing element having an (advantageously printed) surface 1231 being at least the double with respect of the (advantageously printed) surface 1221 of the short-range inductive sensing element provides a good selectivity of the detection threshold distance 18.

Alternatively or complementarily, the processing unit and/or the metal detector are arranged to modify a detection sensibility of the short-range sensing elements and/or of the long-range sensing elements so as to adjust and/or setup their maximal distances 1221 1231.

The detecting unit can be configured to adapt the detection threshold distance, one of said predefined detecting thresholds, and/or one of said detection sensibilities, by receiving new values by trough the communication unit 17 or by an interface of the shoe scanning system 1.

An example not forming part of the invention further concern a method for retrofitting a full-body scanner 45 for scanning an individual 2 before access to a restricted access area, by means of one of the above-described shoe scanning system.

The method comprises a step of placing the inductive sensing elements of the metal detector for sensing a metal objet above a surface 40, 42, 43, 44 onto which the individual 2 is supposed to walk and/or stand for acceding the restricted access area. The surface can be a surface of a path 42, 43 toward or behind the full-body scanner 45 or a walking surface 40 of the full-body scanner 45.

In case the detection unit 10 is provided with a protective casing, the protective casing comprising the metal detector can be located on, or below, the surface.

In case the detection unit 10 is devoid of a protective casing, the inductive sensing elements of the metal detector can be placed below the surface.

The method further comprises a step of establishing a data link between the communication unit 17 of the detection unit 10 and the indication unit 5, 51, 52 for providing instructions to the individual 2 and/or to an assistant 3. The indication unit 5, 51, 52 can be a dedicated display unit of the shoe scanning system or a display unit of the full-body scanner.

The method comprises, advantageously, a step of selecting the detection threshold distance 18 so as to provide a detection of a metal objet within a blind detection volume of the full-body scanner, while reducing false alert.

This step can comprises modifying a detection sensibility of the short-range sensing element and/or a detection sensibility of the long-range sensing element.

The method can further comprise a step of establishing a data link, preferably via an Ethernet connection, between the shoe scanning system 1 and the full-body scanner 45.

The data link can be thus used for providing detection results of the shoe scanning system to the full-body scanner so as to increases the security of body portal. Alternatively or complementarily, the data link can be used to communicate and/or exchange detection results of the shoe scanning system and/or of the full-body scanner so as to aggregate the results provided by both the shoe scanning system and the full-body scanner. The aggregated results can be advantageously displayed by means of the indication unit.

The method can further comprise a step of establishing a command link, preferably via an Ethernet connection, between the shoe scanning system 1 and the full-body scanner 45.

The command link can permit the body scanner to trigger the shoe scanning system for executing a scan on demand, notably in response of detection results of the body scanner indicating a presence of metal and/or dangerous and/or illegal object within the shoes of the individual.

According to the invention, the metal detector (thereafter referenced as main detector for clarity sake) can, complementarily or alternatively, being configured to sense an unauthorized (i.e. non-authorized) object.

An unauthorized (i.e. non-authorized) object can be a non-metallic, dangerous, potentially dangerous, illegal, and/or non-transportable/wearable object according to a national, international and/or a given public or private regulation.

The object can be defined as unauthorized as being within a list of objects (e.g. a black list) defined by a national, international and/or a given public or private regulation. Alternatively or complementarily, the object can be defined as unauthorized as being not listed within (i.e. being absent from) a list of authorized objects (e.g. a white list) that (exhaustively) lists authorized objects a user can wear and/or bring. This list can be defined by a national, international and/or a given public or private regulation.

The unauthorized object can also be an object the body scanner has (or is designed) to detect.

One or more of the above-described sensing elements of the above-described metal detector can thus be replaced by one or more capacitive sensing elements. Alternatively, the sensing elements of the above-described metal detector can either further comprise or uniquely include one or more capacitive sensing elements.

According to the disclosed embodiment, one or more of the above-described sensing elements of the above-described metal detector (e.g. the short-range sensing element and the long-range sensing element) can thus be configured to measure an electromagnetic permittivity or permeability for (complementarily or alternatively) detecting unauthorized objects worn or carried by the individual. Preferably, the measure is provided in the range of 100 kHz to 6 GHz, notably at one or several frequencies on one or both feet.

The shoe scanning system, notably the detection unit or the main detector, can thus be configured to compare the measured electromagnetic permittivity or permeability with data stored, e.g. in a database, and to perform a statistical analysis to identify suspicious data and outliers. Advantageously, the database (exhaustively) collects data about objects a user can wear and bring (e.g. authorized metallic and non-metallic objects) in the restricted area.

These events (notably the identified suspicious data and outliers) may be used to generate an alarm.

These suspicious data and outliers may be used to select certain passengers for additional checks (for instance theirs shoes may be scanned by XRays). The criteria defining the outliers can be tuned so as to lead to a defined number of passengers being more thoroughly searched per defined period of time.

The applicant found that:
the short-range sensing element being arranged to detect a metal and/or unauthorized object located above the given surface up to the first maximal distance, and
the long-range sensing element being arranged to detect a metal and/or unauthorized object located above the given surface up to the second maximal distance,
permit a cost-effective and efficient detection of metal and/or unauthorized objects within the blind and/or oriented blind detection space (or volume) of the full-body scanner.

In fact, a combination of a result provided by the short-range sensing element and a result provided by the long-range sensing element permits to discriminate a metal and/or unauthorized object above the given surface up to the detection threshold distance, being advantageously selectable and/or tuneable, so as to efficacy cover the blind and/or oriented blind detection space (or volume) of the full-body scanner.

In particular, as above-described, the detection threshold distance can be easily selectable and/or tuneable by modifying a detection sensibility of said short-range sensing element and/or a detection sensibility of said long-range sensing element.

Moreover, a combination between the results provided by the short-range sensing elements and the results provided by the long-range sensing elements can provide a scalable accuracy, i.e. a more accurate detection of a metal and/or dangerous object up to the first maximal distance and a less accurate detection between the first and the second maximal distance.

This solution advantageously permits a more accurately scan of a more critical part of the shoes, notably the sole of the shoes, of the user with respect to the upper part thereof. The first maximal distance can thus be selected and/or set so as to coincide with the (typically or standardized) thickness of a sole (i.e. lower part) of a shoe. This arrangement provides thus a more accurate detection of (metal and/or unauthorized) objects located within the sole with respect to other (i.e. upper) parts of the shoe.

### List of reference numerals

- 1: Shoe scanning system
- 10: Detecting unit
- 11: Protective casing
- 110: Cover
- 111: Walking and standing surface
- 112: position for detection
- 113: Recess or cavity
- 114: Height
- 12: Metal detector
- 121: Metal detection circuit
- 122: short-distance, inductive sensing coil
- 1221: maximal detecting distance for short-distance sensing coil(s)
- 1222: Printed surface
- 123: long-distance, inductive sensing coil
- 1231: maximal detecting distance for long-distance sensing coil(s)
- 1232: Printed surface
- 13: Proximity detector
- 131: Proximity detection circuit
- 132: capacitive sensing sensor
- 140: Footprint
- 141: Recess
- 15: Processing unit
- 16: printed circuit board (PCB)
- 17: communication unit
- 171: Data link
- 18: Detecting threshold distance
- 181: Maximal detecting distance
- 182: Minimal detecting distance
- 183: Detecting space
- 184: Overlapping detecting volume
- 2: Passenger
- 20: Shoes or Footwear
- 3: Assistant
- 4: security portal
- 40: security portal flooring
- 401: surface of the security portal flooring
- 41: Restricted area
- 42: Access Path to the security portal
- 43: Access Path to the Restricted area
- 44: Floor
- 45: full-body scanner
- 5: Display of the security portal
- 51: Dedicated display of the shoes detecting system
- 52: Dedicated display of the full-body scanner
- 55: Displayed information

- G, Y-O , R: Green, Yellow/Orange, and Red light

## Claims

1. A shoe scanning system (1) suitable for scanning an individual (2) before access to a restricted access area (41), the system comprising:
a detection unit (10) comprising:
a main detector (12) for sensing a metal and/or unauthorized object above a surface (111) onto which the individual (2) can walk;
a communication unit (17) for transmitting a message to an indication unit (5, 51, 52) for providing instructions to the individual (2) and/or to an assistant (3); and
a processing unit (15) connected to the main detector (12) by a data link for receiving data and controlling the communication unit (17) for sending a detection signal when the main detector indicates a presence of a metal and/or unauthorized object,
wherein the main detector comprises sensing elements (122, 123) located below said surface (111); the sensing elements (122, 123) comprising:
a short-range sensing element (122) arranged to detect a metal and/or unauthorized object located above said surface (111) up to a first maximal distance (1221), and
a long-range sensing element (123) arranged to detect a metal and/or unauthorized object located above said surface (111) up to a second maximal distance (1231), the second maximal distance (1231) being higher than the first maximal distance (1221)
**characterized in that** the processing unit (12) and/or the main detector (12) are configured to combine a result provided by the short-range sensing element and a result provided by the long-range sensing element so as to discriminate a metal and/or unauthorized object above said surface (111) up to a detection threshold distance (18) and **in that** the detection threshold distance is selectable in a range from a predetermined detection minimal distance (182) to a predetermined maximal detection distance (181).

2. The shoe scanning system according to claim 1, wherein the short-range sensing element (122) is an inductive sensing element, and wherein the long-range sensing element (123) is an inductive sensing element.

3. The shoe scanning system according to claim 1, wherein the short-range sensing element (122) is a capacitive sensing element, and wherein the long-range sensing element (123) is a capacitive sensing element.

4. The shoe scanning system according to any one of claims 1 to 3, wherein the processing unit (12) and/or the main detector (12) are configured to combine a result provided by the short-range sensing element and a result provided by the long-range sensing element so as to provide a more accurate detection of a metal and/or unauthorized object up to the first maximal distance (1221) with respect to the detection provided between the first (1221) and the second maximal distance (1231).

5. The shoe scanning system according to any one of claims 1 to 4, said first maximal distance (1221) being lower than said predetermined maximal detection distance (181), and said second maximal distance (1231) being equal or higher than said predetermined maximal detection distance (181).

6. The shoe scanning system according to any one of claims 1 to 5, the processing unit (15) and/or the main detector (12) being able to modify a detection sensitivity of said short-range sensing element and/or of said long-range sensing element so as to modify the first and/or second maximal distance (1221).

7. The shoe scanning system according to any one of claims 1 to 6, wherein the short-range sensing element (122) and/or the long-range sensing element (123) (122, 123) of the main detector (12) are located in one or more recesses (113) of a protective casing (11).

8. The shoe scanning system according to any one of claims 1 to 7, wherein the short-range sensing element, the long-range sensing element and/or one of said sensing elements is arranged to measure an electromagnetic permittivity or permeability, preferably in the range of 100 kHz to 6 GHz, for detecting an unauthorized object, notably a dangerous and/or illegal non-metallic object, worn or carried by the individual.

9. The shoe scanning system according to any one of claims 1 to 8, wherein the detection unit (10) further comprises a proximity detector (13), such as a capacitive sensor, for sensing a positioning of a shoe (20) of the individual (2) on said surface (111).

## Patentansprüche

1. Schuhabtastsystem (1) für das Scannen einer Person (2) vor dem Zugang zu einem beschränkten Zugangsbereich (41), wobei das System umfasst:
eine Detektionseinheit (10), umfassend:
einen Hauptdetektor (12) zum Erfassen eines metallischen und/oder nicht autorisierten Objekts über einer Oberfläche (111), auf welche die Person (2) gehen kann;
eine Kommunikationseinheit (17) zum Übertragen einer Nachricht an eine Anzeigeeinheit (5, 51, 52) zum Bereitstellen von Anweisungen an die Person (2) und/oder einen Assistenten (3); und
eine Verarbeitungseinheit (15), welche über eine Datenverbindung mit dem Hauptdetektor (12) verbunden ist, um Daten zu empfangen und die Kommunikationseinheit (17) zu steuern, um ein Erkennungssignal zu senden, wenn der Hauptdetektor die Anwesenheit eines metallischen und/oder nicht autorisierten Objekts anzeigt,
wobei der Hauptdetektor Sensorelemente (122, 123) umfasst, welche sich unter der besagten Oberfläche (111) befinden; wobei die Sensorelemente (122, 123) umfassen:
ein Nahbereichssensorelement (122), welches dazu angeordnet ist, ein metallisches und/oder nicht autorisiertes Objekt, das sich über der besagten Oberfläche (111) befindet, bis zu einer ersten Maximalentfernung (1221) zu erkennen, und
ein Fernbereichssensorelement (123), welches dazu angeordnet ist, ein metallisches und/oder nicht autorisiertes Objekt, das sich über der besagten Oberfläche (111) befindet, bis zu einer zweiten Maximalentfernung (1231) zu erkennen, wobei die zweite Maximalentfernung (1231) grösser als die erste Maximalentfernung (1221) ist;
**dadurch gekennzeichnet, dass**
die Verarbeitungseinheit (12) und/oder der Hauptdetektor (12) dazu konfiguriert sind, ein vom Nahbereichssensorelement bereitgestelltes Ergebnis und ein vom Fernbereichssensorelement bereitgestelltes Ergebnis zu kombinieren, um so ein metallisches und/oder nicht autorisiertes Objekt über der besagten Oberfläche (111) bis zu einer Erkennungsschwellenentfernung (18) zu unterscheiden,
und dass der Erkennungsschwellenabstand in einem Bereich von einem vorgegebenen minimalen Erkennungsabstand (182) bis zu einem vorgegebenen maximalen Erkennungsabstand (181) wählbar ist.

2. Schuhabtastsystem gemäss Anspruch 1, worin das Nahbereichssensorelement (122) ein induktives Sensorelement ist, und wobei das Fernbereichssensorelement (123) ein induktives Sensorelement ist.

3. Schuhabtastsystem gemäss Anspruch 1, worin das Nahbereichssensorelement (122) ein kapazitives Sensorelement ist, und wobei das Fernbereichssensorelement (123) ein kapazitives Sensorelement ist.

4. Schuhabtastsystem gemäss irgendeinem der Ansprüche 1 bis 3, worin die Verarbeitungseinheit (12) und/oder der Hauptdetektor (12) dazu konfiguriert sind, ein vom Nahbereichssensorelement geliefertes Ergebnis und ein vom Fernbereichssensorelement geliefertes Ergebnis zu kombinieren, um so eine genauere Erkennung eines metallischen und/oder nicht autorisierten Objektes bis zur ersten Maximalentfernung (1221) in Bezug auf die zwischen der ersten (1221) und der zweiten Maximaldistanz (1231) bereitgestellte Erkennung zu liefern.

5. Schuhabtastsystem gemäss irgendeinem der Ansprüche 1 bis 4, wobei die besagte erste Maximaldistanz (1221) geringer ist als die besagte vorgegebene maximale Erfassungsdistanz (181), und wobei die besagte zweite Maximaldistanz (1231) gleich oder grösser als die besagte vorgegebene maximale Erfassungsdistanz (181) ist.

6. Schuhabtastsystem gemäss irgendeinem der Ansprüche 1 bis 5, wobei die Verarbeitungseinheit (15) und/oder der Hauptdetektor (12) in der Lage sind, eine Erfassungsempfindlichkeit des besagten Nahbereichssensorelements und/oder des besagten Fernbereichssensorelements zu verändern, um die erste und/oder zweite Maximaldistanz (1221) zu verändern.

7. Schuhabtastsystem gemäss irgendeinem der Ansprüche 1 bis 6, worin sich das Nahbereichssensorelement (122) und/oder das Fernbereichssensorelement (123) (122, 123) des Hauptdetektors (12) in einer oder mehreren Aussparungen (113) eines Schutzgehäuses (11) befinden.

8. Schuhabtastsystem gemäss irgendeinem der Ansprüche 1 bis 7, worin das Nahbereichssensorelement, das Fernbereichssensorelement und/oder eines der besagten Sensorelemente derart angeordnet sind, um eine elektromagnetische Permittivität oder Permeabilität, vorzugsweise im Bereich von 100 kHz bis 6 GHz zu messen, zum ein nicht autorisiertes Objekt, insbesondere ein gefährliches und/oder illegales nicht metallisches Objekt, welches von der Person getragen oder mit sich geführt wird, zu erkennen.

9. Schuhabtastsystem gemäss irgendeinem der Ansprüche 1 bis 8, worin die Erfassungseinheit (10) zudem einen Näherungsdetektor (13), wie etwa einen kapazitiven Sensor, zum Erfassen der Positionierung eines Schuhs (20) der Person (2) auf der besagten Oberfläche (111) umfasst.

## Revendications

1. Système de scannage de chaussure (1) permettant de scanner un individu (2) avant l'accès à une zone d'accès restreint (41), le système comprenant :
une unité de détection (10) comprenant
un détecteur principal (12) pour détecter un objet métallique et/ou non autorisé au-dessus d'une surface (111) sur laquelle l'individu (2) peut marcher ;
une unité de communication (17) pour transmettre un message à une unité d'indication (5, 51, 52) pour fournir des instructions à l'individu (2) et/ou à un assistant (3) ; et
une unité de traitement (15) reliée au détecteur principal (12) par une liaison de données pour recevoir des données et contrôler l'unité de communication (17) afin d'envoyer un signal de détection lorsque le détecteur principal indique la présence d'un objet métallique et/ou non autorisé,
dans lequel le détecteur principal comprend des éléments de détection (122, 123) situés sous ladite surface (111) ; les éléments de détection (122, 123) comprenant :
un élément de détection à courte portée (122) agencé pour détecter un objet métallique et/ou non autorisé situé au-dessus de ladite surface (111) jusqu'à une première distance maximale (1221), et
un élément de détection à longue portée (123) agencé pour détecter un objet métallique et/ou non autorisé situé au-dessus de ladite surface (111) jusqu'à une deuxième distance maximale (1231), la deuxième distance maximale (1231) étant supérieure à la première distance maximale (1221),
**caractérisé par le fait que** l'unité de traitement (15) et/ou le détecteur principal (12) sont configurés pour combiner un résultat fourni par l'élément de détection à courte portée et un résultat fourni par l'élément de détection à longue portée de manière à discriminer un objet métallique et/ou non autorisé situé au-dessus de ladite surface (111) jusqu'à une distance seuil de détection (18) et **par le fait que** la distance seuil de détection est sélectionnable dans une plage allant d'une distance minimale de détection prédéterminée (182) à une distance maximale de détection prédéterminée (181).

2. Le système de scannage de chaussure selon la revendication 1, dans lequel l'élément de détection à courte portée (122) est un élément de détection inductif, et dans lequel l'élément de détection à longue portée (123) est un élément de détection inductif.

3. Le système de scannage de chaussure selon la revendication 1, dans lequel l'élément de détection à courte portée (122) est un élément de détection capacitif, et dans lequel l'élément de détection à longue portée (123) est un élément de détection capacitif.

4. Le système de scannage de chaussure selon l'une des revendications 1 à 3, dans lequel l'unité de traitement (15) et/ou le détecteur principal (12) sont configurés pour combiner un résultat fourni par l'élément de détection à courte portée et un résultat fourni par l'élément de détection à longue portée de manière à fournir une détection plus précise d'un objet métallique et/ou non autorisé jusqu'à la première distance maximale (1221) par rapport à la détection fournie entre la première (1221) et la deuxième distance maximale (1231).

5. Le système de scannage de chaussure selon l'une des revendications 1 à 4, ladite première distance maximale (1221) étant inférieure à ladite distance maximale de détection prédéterminée (181), et ladite seconde distance maximale (1231) étant égale ou supérieure à ladite distance maximale de détection prédéterminée (181).

6. Le système de scannage de chaussure selon l'une des revendications 1 à 5, l'unité de traitement (15) et/ou le détecteur principal (12) pouvant modifier une sensibilité de détection dudit élément de détection à courte portée et/ou dudit élément de détection à longue portée de manière à modifier la première et/ou la seconde distance maximale (1221).

7. Le système de scannage de chaussure selon l'une des revendications 1 à 6, dans lequel l'élément de détection à courte portée (122) et/ou l'élément de détection à longue portée (123) (122, 123) du détecteur principal (12) sont situés dans un ou plusieurs évidements (113) d'un boîtier de protection (11).

8. Le système de scannage de chaussure selon l'une des revendications 1 à 7, dans lequel l'élément de détection à courte portée, l'élément de détection à longue portée et/ou l'un desdits éléments de détection est agencé pour mesurer une permittivité ou une perméabilité électromagnétique, de préférence dans la plage de 100 kHz à 6 GHz, afin de détecter un objet non autorisé, notamment un objet non métallique dangereux et/ou illégal, porté ou transporté par l'individu.

9. Le système de scannage de chaussure selon l'une des revendications 1 à 8, dans lequel l'unité de détection (10) comprend en outre un détecteur de proximité (13), tel qu'un capteur capacitif, pour détecter le positionnement d'une chaussure (20) de l'individu (2) sur ladite surface (111).
